# EUROPÄISCHE PATENTSCHRIFT

(11) **EP 1 228 355 B1**
(45) Veröffentlichungstag und Bekanntmachung des Hinweises auf die Patenterteilung: **02.07.2008**
(21) Anmeldenummer: 00977473.8
(22) Anmeldetag: 03.11.2000
(51) Int. Cl.: G01N 21/57

(54) **VERFAHREN UND EINRICHTUNGEN ZUM MESSEN UND BEWERTEN DES STREUVERHALTENS VON OBERFLÄCHEN**
METHOD AND DEVICE FOR MEASURING AND EVALUATING THE SCATTERING CHARACTERISTICS OF SURFACES
PROCEDE ET DISPOSITIF PERMETTANT DE MESURER ET D'EVALUER LES CARACTERISTIQUES DE DIFFUSION DE SURFACES

(30) Priorität: 08.11.1999 DE 19954183
(43) Veröffentlichungstag der Anmeldung: 07.08.2002
(73) Patentinhaber: Autronic-Melchers GmbH, 76229 Karlsruhe (DE)
(72) Erfinder: BECKER, Michael, 76135 Karlsruhe (DE); NEUMEIER, Juergen, 69168 Wiesloch (DE)
(74) Vertreter: Führing, Dieter
(86) Internationale Anmeldenummer: PCT/EP2000/010838
(87) Internationale Veröffentlichungsnummer: WO 2001/035077

(56) Entgegenhaltungen:
- EP-A- 0 726 456
- DE-A- 2 556 150
- DE-A- 4 344 095
- DE-A- 4 400 868
- US-A- 5 241 369

## Beschreibung

Die Erfindung betrifft Verfahren und Einrichtungen gemäß den Gattungsangaben der unabhängigen Ansprüche.

Ein solches Verfahren und eine derartige Einrichtung sind insoweit aus der unten näher behandelten DE 196 37 131 A1 bekannt, als auch dort bereits ein Meßfleck mit einem Teststrahl beleuchtet wird. Der ist allerdings hinsichtlich Konizität, Fokuslage und Beleuchtungsneigung einstellbar, um die Auswirkungen verschiedener Umgebungsbedingungen auf das Reflexionsverhalten reproduzierbar simulieren zu können. Die unterschiedlichen Reflexionsrichtungen werden konoskopisch in Ortskoordinaten transformiert und dieses Bild wird über eine verkleinernde Abbildungsoptik (mit Feldlinse und Irisblende zur Begrenzung des meßtechnisch zu erfassenden Meßflekkes) auf ein ortsauflösendes Photometer projiziert, das die Leuchtdichten der jeweils um den Spiegelstrahl herum auftretenden Reflexionen vom Meßfleck mißt; wobei der Spiegelstrahl selbst üblicherweise ausgeblendet wird. Ein Hinweis auf eine Vorgabe bestimmter Divergenzen des Teststrahles zur Beleuchtung des Meßfleckes, um die unten näher erläuterte Quotientenbildung der Reflexions-Leuchtdichten nach dem ISO-Standard durchführen zu können, ist jener Vorveröffentlichung nicht zu entnehmen.

Auch die DE 25 56 150 A befaßt sich allgemein mit dem Messen von Reflexionserscheinungen, nämlich speziell zur Glanzbestimmung. Schon deshalb ist aus ihr kein Hinweis darauf entnehmbar, den zur Normung vorgesehenen Vergleich der Reflexions-Leuchtdichten bei unterschiedlicher Divergenz eines unter konstanter Neigung einstrahlenden Teststrahles durchzuführen. Dort werden vielmehr die Reflexionen eines auf den Meßfleck fokussierten Strahles unter definierten Winkeln gegenüber dem Spiegelstrahl gemessen, indem vor dem Photometer eine Blende mit konstanter Apertur quer zum Spiegelstrahl verlagert wird.

Unter Bezugnahme auf anderweitige, frühere Arbeiten ist in dem Beitrag "Evaluation and Characterization of Display Reflectance" von Dr. M. E. Becker in DISPLAYS 19 (1998) pp. 35-54 dargestellt, daß die Anzeigeeinheit als visuelle Schnittstelle zwischen Mensch und Maschine bestimmten ergonomischen Mindestanforderungen entsprechen muß, um z.B. die tägliche Arbeit an Computer-Monitoren sicher, effektiv und angenehm zu gestalten. Zu den wichtigen ergonomischen Aspekten gehören abgesehen von Bildaufbauzeit und Flicker vor allem der Kontrast und die Leuchtdichte ("Helligkeit") des Bildschirms, sowie die Fähigkeit, störende Reflexionen von Lichtquellen in der Arbeitsumgebung (z.B. herrührend von Fenstern, hellen Wänden, Lampen, etc.) zu unterdrücken. Letzteres ist von besonderer Wichtigkeit, da solche "parasitären" Reflexionen den Kontrast verringern und in ungünstigen Fällen die Augen zum Refokussieren zwischen der Bildschirminformation und den Bildern der Lichtquellen verleiten, was bekanntlich visuell als unangenehm empfunden wird und zu Phänomenen wie Ermüdung und sogar zu Kopfweh führen kann.

Durch bestimmte Maßnahmen (wie z.B. infolge Aufrauhens durch Ätzen oder Aufbringen von Mikrostrukturen) kann die Bildschirmoberfläche grundsätzlich dahingehend beeinflußt werden, daß das von Störlichtquellen kommende Licht in einen breiten Raumwinkel gestreut wird und daß dadurch vom menschlichen Beobachter der Bildschirms kein störendes Bild der Störlichtquelle mehr wahrgenommen wird, sondern nur ein diffuser Lichtfleck, der aber das Auge nicht mehr zum Refokussieren veranlaßt. Es interessiert aber auch in anderen Zusammenhängen das Streuverhalten von Oberflächen bzw. Materialien, z.B. für die computergestützte numerische Modellierung von Gegenständen (einschließlich Pflanzen, Tieren und Menschen), da das menschliche visuelle System bestimmte Materialien durch ihr spezifisches Streuverhalten indentifiziert.

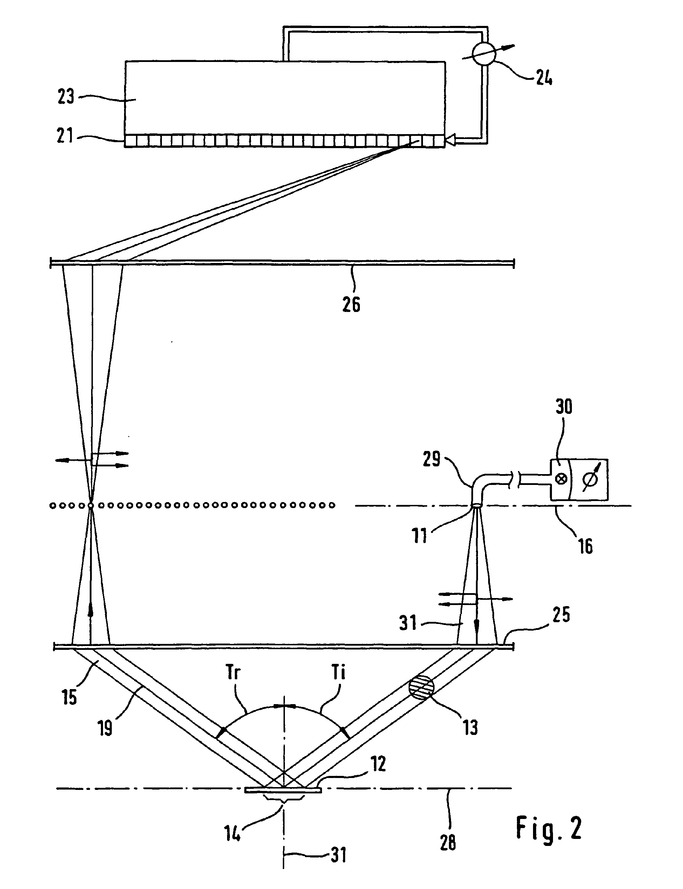

Im Entwurf des internationalen Standards ISO 13406 "Ergonomic requirements for the use of flat-panel displays" ist aufbauend auf die Arbeiten von S. Kubota eine Methode angegeben, nicht erwünschte Spiegelungen von Lichtquellen unterschiedlicher Größe in Bildschirmen zu messen und somit etwa die Wirksamkeit von Entspiegelungsmaßnahmen bewerten zu können. Danach wird das Streuverhalten von Oberflächen (hier speziell von Bildschirmoberflächen) durch die Messung der reflektierten Leuchtdichte von mindestens zwei Lichtquellen unterschiedlicher Größe - aber jeweils gleichmäßiger Verteilung der emittierten Leuchtdichte in der Öffnungsfläche der Lichtquelle - beschrieben, z. B. charakterisiert durch einen Öffnungswinkel des Beleuchtungsstrahles von einmal 1° und einmal 15°, jeweils vom Meßobjekt aus gesehen. Dessen Lichtquelle ist mit 15° Neigung zur Oberflächennormalen des Meßobjekts in einer gemeinsamen Ebene bei spekularer Anordnung (d.h. der Einfallswinkel Theta-i des Beleuchtungsstrahles ist gleich dem Austrittswinkel Theta-r des Reflex- oder Spiegelstrahles in der Einfallsebene) mit einem einkanaligen Photometer angebracht, wie aus Fig.2 der eingangs zitierten Arbeit für diesen üblichen Aufau zur Messung der sog. BRDF ("Bidirektional Reflectance Distribution Function") ersichtlich : Eine Quelle mit sehr geringer Apertur (z.B. ein Laser) bestrahlt die hinsichtlich ihres Reflexionsverhaltens interessierende Oberfläche, und ein gewöhnlich als Teleskop ausgelegtes Photometer, dessen Gesichtskreis (field of view) den Meßfleck auf der Oberfläche bestimmt, erfaßt mit seiner ebenfalls sehr kleinen Apertur die gesamte dort beleuchtete Fläche. Die elementare Beleuchtungsstärke der Photometer-Anregung ist der- auf der zu begutachtenden Objekt-Oberfläche reflektierten - Leuchtdichte proportional, so daß an einem kalibrierten Photometer direkt die am Objekt reflektierte Leuchtdichte abgelesen werden kann.

Im allgemeinen werden die sog. spekularen Reflexionsfaktoren durch Bezug der reflektierten Leuchtdichte Lr auf die jeweiligen Leuchtdichte der Quelle Ls zu R = Lr/Ls beschrieben. Bei ISO 13406 werden die reflektierten Leuchtdichten für jeweils die Lichtquelle mit 1 ° und 15° Öffnungswinkel in Bezug gesetzt zur von der Quelle emittierten Leuchtdichte Ls {R1 = Lr(1°) / Ls und R15 = Lr(15°) / Ls}. Der Unterschied zwischen diesen beiden Quotienten beschreibt das Streuverhalten des Meßobjekts : Je größer der Unterschied zwischen R1 und R15 ist, desto größer ist die Lichtstreuung an der Oberfläche des Meßobjekts.

Der entscheidende Nachteil dieser zunächst einfach erscheinenden Meßmethode liegt in der Schwierigkeit, die Lichtquelle mit ihrer definiert kleinen Öffnung und das Photometer mit gewöhnlich ebenfalls sehr geringer Apertur so zu justieren, daß die optische Achse des Photometers unter Berücksichtigung der Reflexionsgesetze exakt die Mitte der kleinen Öffnung der Lichtquelle trifft. Schon Abweichungen von nur einigen Zehntel Grad von der geforderten Ausrichtung können zu ganz erheblichen Meßfehlern führen, wie sich z.B. aus Fig. 8 oder Fig. 9 des eingangs zitierten Aufsatzes von Becker ergibt. Daraus resultiert, daß die exakte Justage der beschriebenen Meßanordnung extrem zeitaufwendig ist und in Zusammenhang damit die Reproduzierbarkeit von Meßergebnissen sehr schlecht ausfällt. Weiterhin besteht gerade bei kleinen Öffnungswinkeln der Lichtquelle eine große Abhängigkeit des Meßergebnisses von der effektiven Apertur des Photometers, die aber zumeist nicht explizit bekannt ist.

Der vorliegenden Erfindung liegt deshalb die Aufgabe zugrunde, Verfahren und Einrichtungen anzugeben, mit denen das Streuverhalten von Oberflächen so gemessen und bewertet werden kann, daß unter anderem die von ISO 13406 geforderten Beiwerte erhalten werden, wobei jedoch nun eine hohe Unempfindlichkeit gegenüber Einstellungsfehlern in der Geometrie der Meßanordnung erzielt und eine einfache Korrektur auch weiterer systembedingter Fehler eröffnet werden sollen.

Diese Aufgabe ist erfindungsgemäß gemäß den Merkmalen des jeweiligen unabhängigen Anspruches durch Darstellung einer infolge vertauschen von Quelle und Empfänger gewissermaßen inversen BRDF gelöst.

Danach wird das Meßobjekt durch einen bevorzugt parallelen Teststrahl (vorzugsweise) weißen Lichts bestrahlt, jedenfalls durch einen Strahl mit möglichst geringer Divergenz. Das durch Reflexion in den Halbraum über der Proben-Oberfläche gestreute Licht kann grundsätzlich weiterhin z. B. durch die Linse eines einkanaligen Photometers aufgenommen werden, deren Abstand vom Meßfleck und deren effektive Apertur den Raumwinkel Omega-r (Or) bestimmt, über den das Photometer den einfallenden Fluß integriert. Aber dieses einkanalige Photometer ist nun mit einer einstellbaren Eintrittsöffnung (Apertur) ausgestattet, um die Reflexstrahlung über entsprechend eingeschränkte Raumwinkel integrieren zu können. Es tragen also alle Elementarstrahlen, die vom Meßfleck auf der Proben-Oberfläche kommen und durch die gerade gegebene Apertur des Photometers dort eintreten, zum integralen Intensitäts-Meßsignal bei. Allerdings gehen Informationen über die Ausbreitungsrichtung des einfallenden Lichts verloren, wenn das nicht richtungssensitive sondern einkanalige Photometer die durch seine (einstellbare) Apertur einfallende Strahlungsenergie aufsummiert.

Diese erfindungsgemäß somit vorgenommene Vertauschung von Lichtquelle und Photometer (mit Variation der Apertur nicht bei der Lichtquelle, sondern beim Photometer) ist zulässig aufgrund des Helmholtz'schen Reziprozitätsprinzips in der Optik, wonach die Richtung der Lichtausbreitung in einer wohldefinierten Anordnung von Lichtquelle und Empfänger umgedreht werden kann, ohne daß sich dadurch die Verhältnisse und die Ergebnisse ändern.

In dieser erfindungsgemäß "umgekehrten" Meßanordnung zur Bestimmung der BRDF kann also grundsätzlich weiterhin ein einkanaliges Photometer verwendet werden. In Analogie zur ursprünglichen Meßanordnung ist nun aber das einkanalige Photometer mit einer einstellbaren Öffnung versehen, um (anstelle der quellenseitigen Strahleinstellung) jetzt dort über reproduzierbar einstellbare Raumwinkel integrieren zu können, insbesondere z.B. über 1 Grad und über 15 Grad für den ISO-Standard.

Aber es verbleibt immer noch das erwähnte Problem der exakten geometrischen Ausrichtung der optischen Achse des Photometers in Bezug auf die Richtung des von der Probe kommenden spekularen (Reflex-) Strahles, insbesondere bei kleinen Aperturen des Photometers. Gemäß einer Weiterbildung vorliegender Erfindung kommt, um dieses Justageproblem künftig ausschließen zu können, statt des bisher üblichen einkanaligen Photometers nun ein richtungsauflösendes Photometer zum Einsatz, um bei der inversen BRDF auch Informationen über die Richtung der von der Probe gestreuten Elementarstrahlen zu erhalten. Ein solches Photometer ermöglicht also die Bestimmung der von der Probe in bestimmte Richtungen reflektierten Leuchtdichte über die Umwandlung von Richtungsinformation in eine Ortsinformation, was z.B. wie nachstehend näher erläutert durch einen transluzenten streuenden Schirm oder die Verwendung einer konoskopischen Linse realisiert werden kann. Dieser Transformation von einer Raumrichtung in einen Flächenpunkt werden alle den Spiegelstrahl umgebenden Elementarstrahlen im zu erfassenden Raumwinkel gleichermaßen unterzogen. Bei solcher Umsetzung von Richtungsinformation in Ortsinformation ist die letztlich sich einstellende Spiegelrichtung zwar nicht exakt vorbekannt, da schon geringe Fehlausrichtungen von Quelle, Probe und/oder richtungsauflösendem Photometer zu Abweichungen führen. Da bei der Umsetzung die Richtungsinformation jedoch erhalten bleibt, genügt es zunächst, die Spiegelrichtung ungefähr zu kennen, um dann in einem folgenden Schritt für die gegebene Richtungsverteilung des gestreuten Lichts die Orientierung der Spiegelrichtung z.B. aus der Lage des Maximums des gestreuten Lichts exakt zu bestimmen. Danach kann das richtungsauflösende Photometer genau um die so ermittelte Spiegelrichtung zentriert werden.

Die erwähnte Umsetzung, also die Ermittlung der Richtungsverteilung des von der Probe gestreuten Lichts kann wie erwähnt mittels eines ebenen und/oder sphärischen transluzent streuenden Schirmes erfolgen, der senkrecht zur Richtung des von der Probe kommenden spekularen Strahls angebracht wird, um die Richtungsverteilung des reflektierten Lichts in der Umgebung des Spiegelstrahles als eine auf dem Schirm auszumessende örtliche Verteilung darzustellen. Die Erfassung der örtlichen Intensitätsverteilung des gestreuten Lichts in der Umgebung des Spiegelstrahls erfolgt dann durch das ortsauflösende Photometer, auf dessen regelmäßige Anordnung von Detektorelementen die auf dem Schirm sich ausbildende Intensitätsverteilung abgebildet wird.

Apparativ einfacher als mittels des Schirmes ist die Umsetzung der Richtungsinformation in eine Ortsinformation nach dem konoskopischen Prinzip realisierbar, also mittels einer positiven (also konvergierenden) Linse, die wie andernfalls der Schirm zur Spiegelrichtung zentriert ist, bei Lage des Meßfleckes auf der Proben-Oberfläche genau im objektseitigen Brennpunkt dieser Linse. Dann entsteht nach dem konoskopischen Prinzip in der bildseitigen Brennebene der Linse eine zweidimensionale Abbildung der Richtungs- und Intensitätsverteilung des von der Probe in den Raumwinkel Omega□r gestreuten und durch die Linsenapertur hindurchtretenden Lichts. Der Raumwinkel ist gegeben durch die Apertur der Linse und ihre Brennweite. Die abgebildete richtungsabhängige Intensitätsverteilung, bei der jedem Punkt in der Abbildungsebene eindeutig eine Lichtausbreitungsrichtung zugeordnet ist, ist ein reelles Bild, das mittels eines Schirmes dargestellt oder direkt mittels eines ortsauflösenden Photometers analysiert werden kann. Hierfür wird die so wieder der Richtungsverteilung des gestreuten Lichts entsprechende örtliche Intensitätsverteilung entweder direkt auf einer regelmäßigen Anordnung von elementaren Detektorelementen (z.B. in einer CCD- oder CMOS-Kamera) abgebildet, oder sie wird in verkleinerter Form auf eine solche projiziert.

Bei Erzeugen der konoskopischen Abbildung für das Umsetzen der Richtungs- in eine Ortsinformation unter Einsatz einer (teureren) großaperturigen Linse dagegen, in deren vorderer Brennebene sich eine im wesentlichen ebene Probe befindet, ergibt sich der handhabungstechnisch große zusätzliche Vorteil, durch diese Linse hindurch den Meßfleck auf der interessierenden Oberfläche bestrahlen zu können, wie es insoweit in der DE 196 37 131 A1 näher beschrieben ist. Wenn also gemäß dieser Weiterbildung vorliegender Erfindung eine großaperturige Linse angewandt wird, in deren objektseitiger Brennebene sich die Probe befindet, dann wird diese von einem Teststrahl durch die Linse hindurch beleuchtet, so daß nach dem konoskopischen Prinzip die Richtungsverteilung des in den Halbraum über der Probe gestreuten Lichts in der hinteren Brennebene der Linse als sogenannte "konoskopische Figur" abgebildet wird. Auch in dieser Figur entspricht wieder jeder einzelne Punkt einer strahlengeometrisch zugeordneten Ausbreitungsrichtung des vom Meßfleck auf der Probe herrührenden gestreuten Lichts.

Im Zuge der Abbildung dieser (der letztlich gesuchten BRDF des Meßobjekts schon entsprechenden) Richtungsverteilung auf eine regelmäßige zweidimensionale Anordnung von elementaren Photoempfängern (z.B. auf die Detektorelemente einer CCD oder CMOS Kamera) samt Übertragung der einzelnen digitalisierten Intensitätsmeßwerte in eine elektronische Datenverarbeitungsanlage (wie in DE 196 37 131 A1 näher beschrieben) kann nun durch numerische Integration über einen bestimmten Bereich von Detektorelementen, die dem gewünschten Raumwinkel entsprechen, ein Photometer mit beliebig einstellbarem Öffnungswinkel elektronisch nachgebildet werden, indem einfach über einen entsprechend festgelegten Bereich von Detektorelementen integriert wird. Der Maximalwert der so einstellbaren Apertur wird durch Details der Linsenkonstruktion bestimmt.

Zur weiteren Erläuterung der Erfindung und ihrer Weiterbildungen wird auf die bevorzugten apparativen Realisierungen gemäß den abstrahierten Prinzipdarstellungen in der Zeichnung und deren nachstehender Beschreibung verwiesen. In der Zeichnung zeigt:

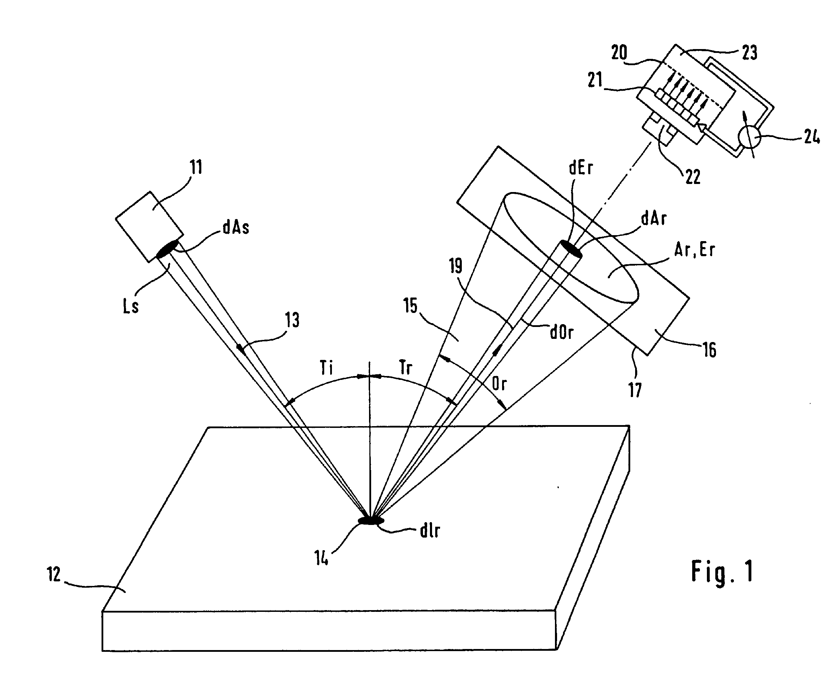

Fig. 1 das Prinzip der umgekehrten BRDF mit detektorseitiger Richtungsauflösung zum Bewerten des Streuverhaltens einer bestrahlten Oberfläche mittels eines Projektionsschirmes, unter Berücksichtigung einer Kompensation ungenauer Ausrichtung durch Verlagerung der für eine Integration ausgewählten Detektorelemente eines abbildenden Photometers relativ zum Spiegelstrahlzentrum, und
Fig.2 für ein erfindungsgemäßes Umsetzen der Richtungsinformation in eine Ortsinformation abweichend von dem strahlengeometrischen Aufbau nach Fig.1 eine konoskopische Anordnung mit einer großaperturigen Linse, durch die hindurch das Objekt auch beleuchtet wird.

Eine Lichtquelle 11 mit kleiner Apertur dAs (also mit kleiner strahlender Fläche dAs in Abstand zum Meßfleck auf der Probe) bestrahlt eine Oberfläche 12 mit einem möglichst wenig divergierenden (also möglichst parallelen) Teststrahl 13 von vorzugsweise weißem Licht, der über seinen gesamten Querschnitt eine möglichst gleichmäßige Verteilung der Leuchtdichte Ls aufweist und der auf einen Meßfleck 14 in der Oberfläche 12 gerichtet ist. Der Teststrahl 13 muß nicht dünn und nicht auf die Oberfläche 12 fokussiert sein.

Der in der Einfallsebene des Teststrahles 13 für den spekularen Fall, also unter gleichem Eintritts- wie Austrittswinkel Theta zur Normalen (Theta-i = Theta-r), auf dem Meßfleck 14 in der hinsichtlich ihres Reflexionsverhaltens interessierenden Oberfläche 12 hervorgerufene streubedingt konisch sich aufweitende Reflexstrahl 15 ist in der Prinzipdarstellung der Fig.1 zum Umsetzen der Richtungsinformation in eine Ortsinformation auf die orthogonal zu ihm ausgerichtete Ebene eines Streuschirmes 17 gerichtet und ergibt darauf eine Helligkeitsverteilung [elementare Beleuchtungsstärke dEr = f (Theta, Phi)] der sich über einen Raumwinkel Omega-r (Or) erstreckende Abbildung des vom Meßfleck 14 gestreut reflektierten Lichts. Dessen elementare Beleuchtungsstärke dEr am Schirm 17 ist der reflektierten Leuchtdichte dLr proportional. Das Helligkeitszentrum 18 liegt in der Spiegel- oder Zentralachse 19 des gegenüber dem Teststrahl 13 aufgeweiteten Reflexstrahles 15 und damit auch im Eintritts- = Austrittswinkel.

Ein abbildendes Photometer 20 mit zweidimensionalem Array von Detektorelementen 21, etwa eine CCD oder CMOS-Kamera, definiert mit seiner Abbildung den auszuwertenden Meßfleck 14 und dient zur Bestimmung der Leuchtdichte von Flächenelementen dAr als Funktion des Ortes auf dem - senkrecht zur Richtung des von der Oberfläche 12 kommenden spekularen Strahles 15 angebrachten - Schirm 17, auf dem die Richtungsverteilung des reflektierten Lichts in eine örtliche Verteilung umgesetzt wird. Bei dieser örtlichen Verteilung handelt es sich schon um die gesuchte sog. BRDF (bidirektional reflectance distribution function) der Oberfläche 12, nämlich um die Projektion der BRDF auf einen ebenen Schirm.

Das Photometer 20 mit seiner Empfängerfläche Ar ist dafür mittels einer Optik 22 auf die Abbildung in der Projektionsebene 16 fokussiert, um die im Raumwinkel □r enthaltene richtungsabhängige Helligkeitsverteilung aufzunehmen und der Signalverarbeitung 23 zuzuführen. Somit kann durch die numerische Integration über den einstellbaren Raumwinkel dOr ein Photometer 20 mit beliebigem Öffnungswinkel Or elektronisch nachgebildet werden, indem über einen entsprechenden Bereich von Detektorelementen 21 integriert wird. Zugleich kann in der Signalverarbeitung 23 die effektive Größe der sich aus Apertur von Quelle 11 und Photometer 20 ergebende Systemsignatur durch numerische Integration über einen Raumwinkelbereich dOr nachgebildet werden, um einen aus unterschiedlich genau definierten Photometeraperturen resultierenden systematischen Fehler zu kompensieren.

Dasjenige der Detektorelemente 21, das am intensivsten bestrahlt wird, kennzeichnet die Lage des Helligkeitszentrums in der Abbildung als die Lage der Zentralachse 19 im Reflexstrahl 15 und somit die Spiegelrichtung. Mittels einer Auswahlschaltung 24 wird eine Anzahl von bestimmten Detektorelementen 21 um diese Position des Intensitätszentrums 18 herum gewissermaßen freigeschaltet, nämlich es werden nur deren Detektorsignale bei der anschließenden numerischen Auswertung (z.B. Integration) in der Signalverarbeitung 23 berücksichtigt. So wird elektrisch die Lage des Projektions-Flächenelementes dAr vorgegeben, über dessen elementaren Raumwinkel dOmega-r (in der Größenordnung von dOr maximal 1°) die Reflexstrahlung 15 im Photometer 20 aufsummiert (integriert) werden soll. Die Zentrierung des auszuwertenden Flächenelementes dAr zur Spiegelrichtung erfordert also keinerlei mechanische Feinjustage des Photometers 20 mehr, sie erfolgt vielmehr elektronisch über eine entsprechende Zuordnung von Detektorelementen 21. Unabhängig von der Zentrierung erfolgt über diese Detektor-Auswahlschaltung 24 auch die Umschaltung der Detektorapertur, um unterschiedlich gebündelte Reflexstrahlen 15 zum parallelen Teststrahl 13 konstanten Durchmessers ins Verhältnis setzen zu können.

Nicht zeichnerisch dargestellt ist die Lösungsalternative, bei gleichen strahlengeometrischen Verhältnissen hinsichtlich des Einstrahlens der Teststrahlquelle 11 entsprechend Fig.1 statt des Projektionsschirmes (17 in Fig.1) eine preisgünstig verfügbare kleinaperturige positive Linse senkrecht und zentriert zur Spiegelrichtung einzusetzen. In deren vorderen, objektseitigen Brennpunkt liegt dann der Meßfleck 14 auf der Proben-Oberfläche 12, so daß nach dem sog. konoskopischen Prinzip in der hinteren, bildseitigen Brennebene dieser Linse (entsprechend der Bildschirmdarstellung nach Fig.1) wieder die vom zweidimensionalen Photometer-Array 20-21 aufzunehmende Richtungsverteilung der Reflexstrahlung 15 dargestellt wird.

Um also vor allem die Justageprobleme der exakt spekularen Ausrichtung von Lichtquelle 11 und Photometer 20 zur Ermittlung reflexabhängiger Kenngrößen auf einer Oberfläche 12 zu umgehen, werden erfindungsgemäß nicht mehr die Reflexe von Teststrahlen aus Lichtquellen unterschiedlicher Aperturen mittels eines einkanaligen Photometers mit fixierter Apertur aufgenommen, sondern der Reflex eines parallelen Teststrahles 13 wird von einem richtungsauflösenden Photometer 20 mit einstellbarer Apertur in Form von - in der Umgebung des abgebildeten Helligkeitszentrums und damit der Spiegelrichtung 15 - aus einem Array auswählbaren, einander benachbarten Detektorelementen 21 erfaßt. Auf dem Umweg über die Ortsauflösung wird so eine "Richtungsauflösung" des Photometers 20 realisiert, ohne daß es auf eine Einstellbarkeit der Photometer-Apertur ankommt. Dazu erfolgt die Abbildung der richtungsabhängigen Reflexintensitäten in eine vom Photometer 20 aufzunehmende Ortsdarstellung z.B. mittels eines Projektionsschirmes 17, bevorzugt jedoch im Wege einer konoskopischen Abbildung.

Auch die bevorzugte apparative Realisierung nach Fig.2 bedient sich der konoskopischen Darstellung für die Abbildung der Richtungsverteilung von Strahlung auf eine regelmäßige zweidimensionale Anordnung von auswählbaren Detektorelementen 21 (wie insbesondere der elementaren Photoempfänger einer CCD oder CMOS-Kamera) zur Integration über unterschiedlich große Projektionsflächen und Digitalisierung sowie Übertragung in eine elektronische Daten-Signalverarbeitungsanlage 23 (wie insoweit in DE 196 37 131 A1 näher beschrieben).

Wiederum wird erfindungsgemäß - insoweit gemäß Fig.1 - die Funktionsrichtung der Normanordnung aus dem Stande der Technik umgedreht, also nun der Reflex 15 eines parallelen Teststrahles 13 von einem Photometer 20 aufgenommen. Wenn es sich - gemäß Fig.1 - wieder um ein abbildendes Photometer 20 handelt, kann wieder zur elektrischen Veränderung seiner Apertur über einen entsprechend eingeschränkten Bereich von Detektorelementen 21 integriert werden, also durch numerische Integration über einen kleinen Raumwinkel ein Photometer 20 mit einem dementsprechend beliebig einstellbaren Öffnungswinkel elektronisch nachgebildet werden. Stets gilt, daß - da über den Schirm 17 oder über die gleich ausgerichtete Abbildungsoptik alle Richtungskomponenten des von der Oberfläche 12 gestreuten Lichts über einen Teil-Raumwinkel Omega-r von z. B. ± 80° aufgefangen werden - gemäß Fig.1 die exakte Richtung (Zentralachse 19) der spekularen Komponente leicht aus der gemessenen zweidimensionalen Intensitätsverteilung zu ermitteln ist, auch wenn die Ausrichtung der Oberfläche 12 zur optischen Achse des Projektionssystems nicht ideal exakt sein sollte, was in der Praxis häufig der Fall ist. Durch numerische Ermittlung der maximalen Intensität der reflektierten Komponenten kann also wieder problemlos die Spiegelrichtung Theta (Theta-r = Theta-i) ermittelt werden, um welche herum dann der "elektronische Detektor mit einstellbarer Apertur" durch entsprechende Auswahl der Detektorelemente 21 eines abbildenden Photometers 20 mittels der Schaltung 24 exakt plaziert (vor allem zentriert) und abgestuft dimensioniert werden kann.

Für eine konoskopische Abbildung gemäß Fig.2 ist eine nun großaperturige Konvergenz-Linse 25 vor dem Photometer 20 so angeordnet, daß in der vorderen Brennebene der Linse 25 der ebene Oberflächen-Meßfleck 14 liegt. Die Linse 25 wandelt die Richtungsverteilung des von der Oberfläche 12 einfallendem (Reflex-) Lichts 15 in der hinteren Linsen-Brennebene 16 in eine strahlengeometrisch definierte örtliche Verteilung um, die wieder mittels einer zweidimensionalen Anordnung von elementaren Photoempfängern in Form der Detektorelemente 21 erfaßt wird. Dafür können die Detektorelemente 21 des Photometers 20 - entgegen der Zwischenschaltung einer Projektionsoptik 26 nach Fig.2 - auch direkt in der hinteren Brennebene 16 der Linse 25 liegen.

Im Falle der Fig.2 liegt die Transformationslinse 25 nicht (wie der Projektionsschirm nach Fig.1) zentriert zur Spiegelrichtung 15. Vielmehr wird der Meßfleck 14, der sich in der vorderen Brennebene 28 der hochaperturigen Linse 25 befindet, durch diese hindurch von einem parallelen Teststrahl 13 unter verschieden wählbaren Einfallsrichtungen Theta (Ti) gegenüber der Normalen auf der ebenen Oberfläche 12 im Meßfleck 14 bestrahlt, deren Richtung mit der optischen Achse 31 der Linse 25 und des Photometers 20 zusammenfällt. Diese Beleuchtung wird allgemein dadurch realisiert, daß eine elementare Lichtquelle 11 in der hinteren Brennebene mit einer Bündelrichtung parallel zur optischen Achse 31 der des Systems konisch emittiert, woraufhin dieser bildseitig konische Strahl 32 auf der Objektseite der Linse 25 durch diese in den parallelen Teststrahl 13 transformiert wird. Hierbei wird der Durchmesser des also objektseitig parallelen Strahles 13 durch die Divergenz des bildseitigen Strahles 32 bestimmt, und die objektseitige Divergenz des parallelen Strahles 13 durch die Ausdehnung der Lichtquelle 11, die in der bildseitigen Brennebene 16 verlagerbar angebracht ist. Diese Beleuchtung entspricht also der Umkehrung des optischen Strahlenganges bei der konoskopischen Abbildung.

Ein so über die Verlagerung der Quelle 11 auf dem Meßfleck 14 verschwenkbarer Teststrahl 13 wird z.B. von einer lichtemittierenden Halbleiterdiode als der direkt in der hinteren Brennebene 16 gelegenen Lichtquelle 11 geliefert, oder er wird wie skizziert dadurch gewonnen, daß aus einem möglichst sowohl spektral wie auch hinsichtlich Intensität einstellbaren Lichtgenerator 30 zunächst ein Lichtleiter 29 gespeist wird, dessen Lichtaustrittsfläche dann als die eigentliche Lichtquelle 11 in der bildseitigen Brennebene 16 der Linse 25 verschiebbar ist, wie in Fig.2 durch Pfeile veranschaulicht.

Der vor der Lichtleiter-Austrittsfläche in der Brennebene 16 konisch sich öffnende Strahl 32 wird also von der nun großaperturigen Linse 25 in den positionsabhängig geneigten parallelen Teststrahl 13 umgewandelt und auf den Meßfleck 14 gerichtet, von wo der aufgeweitete Spiegel- oder Reflexstrahl 15 über eben diese Linse 25 - aber bei der Bestrahlung entgegengesetzt gerichtetem Strahlengang - richtungsabhängig in eine zweidimensionale Position in der Bildebene 16 projiziert wird und hier als flächige Helligkeitsverteilung (unmittelbar, oder über eine gesonderte Projektionsoptik 26 zur geometrischen Anpassung) die Detektorelemente 21 anregt.

Zusammenfassend kann also festgestellt werden, daß sich die Justageprobleme der exakt spekularen Ausrichtung von Lichtquelle und Photometer zur Ermittlung reflexabhängiger Kenngrößen auf einer Oberfläche erfindungsgemäß umgehen lassen, wenn nicht mehr die Reflexe von Teststrahlen aus Lichtquellen mit unterschiedlichen Aperturen mittels eines einkanaligen Photometers mit fixierter Apertur aufgenommen, sondern die Reflexe eines z.B. parallelen Teststrahles von einem bevorzugt ortsauflösenden Photometer mit einstellbarer Apertur erfaßt werden. Die Aperturveränderung kann dabei durch Auswahl im Array von Detektorelementen in der Umgebung des abgebildeten Helligkeitszentrums erfolgen. So werden mit elektronisch bzw. mathematisch einstellbarer Detektorapertur inverse BRDFs gebildet. Die Abbildung der richtungsabhängigen Reflexintensitäten in eine vom Photometer aufzunehmende Ortsdarstellung erfolgt dazu mittels eines senkrecht zum Spiegelstrahl orientierten Projektionsschirmes, bevorzugt jedoch im Wege einer konoskopischen Abbildung mittels einer kleinaperturigen Linse statt des Schirmes oder mittels einer großaperturigen Linse, wobei nun der Teststrahl von der bildseitigen (rückwärtigen) Fokusebene her aus auswählbaren Positionen durch diese Linse hindurch der Abbildungsrichtung entgegen auf den Meßfleck in der vorderen (objektseitigen) Fokusebene der Linse gerichtet wird.

## Patentansprüche

1. Verfahren zum Messen und Bewerten des Streuverhaltens einer aus einer Lichtquelle mit einem Teststrahl auf einem Messfleck bestrahlten Oberfläche durch photometrisches Messen der Leuchtdichte bzw. der Richtungsverteilung des reflektierten Lichts in der Umgebung des Spiegelstrahles, **dadurch gekennzeichnet, dass** für eine Verhältnisbildung von reflektierten Leuchtdichten, bei Bestrahlung des Messfleckes unter einer konstanten Neigung aus einer kleinflächigen Lichtquelle geringer Divergenz mit konstanter Apertur, die um das reflektierte Strahlungsmaximum herum zentrierte reflektierte Leuchtdichte über unterschiedlich eingeschränkte Raumwinkel mittels einer unterschiedlichen Auswahl von einander benachbarten Detektorelementen eines ortsauflösenden Photometers integriert wird.

2. Verfahren nach Anspruch 1, **dadurch gekennzeichnet, daß** die reflektierte Leuchtdichte mittels eines Schirmes richtungsabhängig auf eine zentriert und orthogonal zum Spiegelstrahl orientierte Ebene projiziert und darauf mittels des Photometers ausgemessen wird.

3. Verfahren nach Anspruch 1, **dadurch gekennzeichnet, daß** die reflektierte Leuchtdichte mittels einer Konvergenz-Linse richtungsabhängig auf eine zentriert und orthogonal zum Spiegelstrahl orientierte Ebene projiziert und darauf mittels des Photometers ausgemessen wird.

4. Verfahren nach Anspruch 3, **dadurch gekennzeichnet, daß** die Oberfläche durch die, orthogonal zu ihrer Normalen angeordnete, Konvergenz-Linse hindurch beleuchtet wird, welche in entgegengesetzter Strahlrichtung die winkelabhängig reflektierte Leuchtdichte in ihre Abbildungsebene projiziert.

5. Einrichtung zum Messen und Bewerten des Streuverhaltens einer aus einer Lichtquelle (11) mit einem Teststrahl (13) auf einem Messfleck (14) bestrahlten Oberfläche (12) durch Messen der Leuchtdichte bzw. der Richtungsverteilung des reflektierten Lichts in der Umgebung des vom Messfleck (14) ausgehenden Spiegelstrahles (19), **dadurch gekennzeichnet, dass** die Lichtquelle (11; dAs) kleinflächig und mit konstanter Apertur für die Abgabe eines Teststrahles (13) geringer Divergenz ausgelegt und unter konstanter Neigung auf den Messfleck (14) ausgerichtet ist, und dass ein ortsauflösendes Photometer (20) für die reflektierte Leuchtdichte ebenfalls auf den Messfleck (14) ausgerichtet und dabei so ausgebildet ist, dass es eine unterschiedliche Auswahl seiner einander benachbarten Detektorelemente (21) zur Integration über unterschiedlich eingeschränkte Raumwinkel um das reflektierte Strahlungsmaximum herum zuläßt.

6. Einrichtung nach Anspruch 5, **dadurch gekennzeichnet, daß** zwischen dem Photometer (20) und dem Meßfleck (14) ein orthogonal zum vom Meßfleck (14) reflektierten Spiegelstrahl (19) orientierter ebener oder sphärischer transluzenter streuender Schirm (17) angeordnet ist.

## Claims

1. Method for measuring and evaluating the scattering behaviour of a surface irradiated from a light source with a test beam on a measurement spot by means of photometric measurement of the luminance or the directional distribution of the reflected light in the surrounding area of the reflected beam, **characterized in that**, when the measurement spot is irradiated at a constant inclination from a small-area light source of low divergence with constant aperture, the reflected luminance centred around the reflected radiation maximum is integrated over differently delimited solid angles by means of a differing choice of mutually adjacent detector elements of a spatially resolving photometer in order to form a ratio of reflected luminances.

2. Method according to Claim 1, **characterized in that** the reflected luminance is projected in a directionally dependent manner onto a centred plane, which is orientated in a fashion orthogonal to the reflected beam, by means of a screen and is measured thereon using the photometer.

3. Method according to Claim 1, **characterized in that** the reflected luminance is projected in a directionally dependent manner onto a centred plane, which is orientated in a fashion orthogonal to the reflected beam, by means of a converging lens and is measured thereon using the photometer.

4. Method according to Claim 3, **characterized in that** the surface is illuminated through the converging lens, which is arranged in a fashion orthogonal to its normal and projects the luminance, which is reflected in an angularly dependent manner, into its projection plane in the opposite beam direction.

5. Device for measuring and evaluating the scattering behaviour of a surface (12) irradiated from a light source (11) with a test beam (13) on a measurement spot (14) by means of measuring the luminance or the directional distribution of the reflected light in the surrounding area of the reflected beam (19) emanating from the measurement spot (14), **characterized in that** the light source (11; dAs) is designed with a small area and with a constant aperture for the emission of a test beam (13) of low divergence and is aligned with the measurement spot (14) at a constant inclination, and **in that** a spatially resolving photometer (20) for the reflected luminance is likewise aligned with the measurement spot (14) and is likewise designed such that it allows a differing choice of its mutually adjacent detector elements (21) for integration over differently delimited solid angles around the reflected radiation maximum.

6. Device according to Claim 5, **characterized in that** a planar or spherical translucent scattering screen (17), which is orientated, in a fashion orthogonal to the reflected beam (19), which is reflected from the measurement spot (14), is arranged between the photometer (20) and the measurement spot (14).

## Revendications

1. Procédé pour la mesure et l'évaluation des caractéristiques de diffusion d'une surface, éclairée sur une tache de mesure au moyen d'un rayon de test provenant d'une source lumineuse, par la mesure photométrique de la densité lumineuse respectivement de la distribution de la direction de la lumière réfléchie dans l'environnement du rayon réfléchi, **caractérisé en ce que** pour une constitution du rapport des densités lumineuses réfléchies, lors de l'irradiation de la tache de mesure sous une inclinaison constante à partir d'une source lumineuse de faible surface, de divergence insignifiante, avec une ouverture constante, la densité lumineuse réfléchie centrée autour du maximum de rayonnement réfléchi est intégrée sous différents angles de l'espace limités de différentes manières au moyen d'un choix varié d'éléments de détecteurs avoisinants d'un photomètre à résolution géométrique.

2. Procédé selon la revendication 1, **caractérisé en ce que** la densité lumineuse réfléchie est projetée au moyen d'un écran en fonction de la direction sur un plan centré et orienté orthogonalement au rayon réfléchi et qu'elle y est mesurée au moyen du photomètre.

3. Procédé selon la revendication 1, **caractérisé en ce que** la densité lumineuse réfléchie est projetée au moyen d'une lentille convergente en fonction de la direction sur un plan centré et orienté orthogonalement au rayon réfléchi et qu'elle y est mesurée au moyen du photomètre.

4. Procédé selon la revendication 3, **caractérisé en ce que** la surface est illuminée à travers la lentille convergente disposée orthogonalement à sa normale, qui projette dans la direction opposée aux rayons, la densité lumineuse réfléchie en fonction de la direction dans son plan image.

5. Dispositif pour la mesure et l'évaluation des caractéristiques de diffusion d'une surface (12), éclairée sur une tache de mesure (14) au moyen d'un rayon de test (13) provenant d'une source lumineuse (11), par la mesure de la densité lumineuse respectivement de la distribution de la direction de la lumière réfléchie dans l'environnement du rayon réfléchi (19) provenant de la tache de mesure (14), **caractérisé en ce que** la source lumineuse (11 ; dAs) est conçue de faible surface et d'ouverture constante pour fournir un rayon de test (13) de divergence insignifiante et qu'elle est dirigée sous une inclinaison constante sur la tache de mesure (14), et **en ce qu'**un photomètre à résolution géométrique (20) pour la densité lumineuse réfléchie est également dirigé sur la tache de mesure (14) et qu'il y est conçu de telle sorte qu'il autorise un choix varié de ses éléments de détecteurs avoisinants (21) pour l'intégration sous différents angles de l'espace limités de différentes manières autour du maximum de rayonnement réfléchi.

6. Dispositif selon la revendication 5, **caractérisé en ce qu'**un écran diffusant translucide (17) plat ou sphérique orienté orthogonalement au rayon réfléchi (19) renvoyé par la tache lumineuse (14) est disposé entre le photomètre (20) et la tache de mesure (14).
